# EUROPÄISCHE PATENTSCHRIFT

(11) **EP 2 587 049 B1**
(45) Veröffentlichungstag und Bekanntmachung des Hinweises auf die Patenterteilung: **21.02.2018**
(21) Anmeldenummer: 12189278.0
(22) Anmeldetag: 19.10.2012
(51) Int. Cl.: F03B 17/06, F03D 5/06

(54) **Strömungskraftwerk und Verfahren zur Wandlung von Strömung eines flüssigen oder gasförmigen Mediums in mechanische und/oder elektrische Energie**
Power plant and method for converting the flow of a fluid or gaseous medium into mechanical and/or electrical energy
Système et procédé de conversion de l'écoulement d'un milieu liquide ou gazeux en énergie mécanique et/ou électrique

(30) Priorität: 26.10.2011 DE 102011054811
(43) Veröffentlichungstag der Anmeldung: 01.05.2013
(73) Patentinhaber: Schmutterer, Thomas, 93049 Regensburg (DE)
(72) Erfinder: Schmutterer, Thomas, 93049 Regensburg (DE)
(74) Vertreter: Schuhbießer, Irmgard Gertrud

(56) Entgegenhaltungen:
- DE-A1- 3 522 995
- GB-A- 2 454 024
- US-A1- 2002 040 948
- US-A1- 2008 148 723

## Beschreibung

Die Erfindung bezieht sich auf ein Strömungskraftwerk und ein Verfahren zur Wandlung von Strömung eines flüssigen oder gasförmigen Mediums in mechanische und/oder elektrische Energie. Insbesondere bezieht sich die Erfindung auf ein Fließwasserkraftwerk und ein Verfahren zur Wandlung von Wasserströmung eines Fließgewässers in mechanische und/oder elektrische Energie. DE 35 22 995 A1 zeigt eine Windenergieanlage mit mehreren, parallel übereinanderliegenden Tragflügeln, die vom Boden über Getriebe, vorzugsweise Schubkurbeln, periodisch so geführt werden, dass sie eine der Windströmung entnommene Leistung an eine Energiegewinnungsanlage am Boden abgeben. Die einzelnen Tragflügel sind so geführt, dass sie sowohl beim Aufwärtshub wie beim Abwärtshub Windenergie nutzbar machen. US 2008/0148723 A1 offenbart ein weiteres Strömungskraftwerk. Aus dem Stand der Technik sind als Wasserkraftwerke beispielsweise Wasserräder mit Schaufeln bekannt, welche die Strömungskraft eines Fließgewässers nutzen. Hierbei wird das Wasserrad in eine Drehung versetzt, indem eine Gewässerströmung auf seine Schaufeln geleitet wird. Ist das Wasserrad mit beispielsweise einem Mahlwerk oder ein Motor gekoppelt, kann es diese antreiben. Es sind auch Wasserkraftwerke bekannt, bei welchen ein Fließgewässer aufzustauen ist, und das aufgestaute Wasser in einer kontrollierten Strömung zum Antrieb einer Turbine genutzt wird.
Das Aufstauen eines Gewässers ist jedoch nicht immer möglich. Gegebenenfalls ist das Aufstauen eines Gewässers auch aufgrund gesetzlicher Regelungen verboten, da durch das Aufstauen Fauna und Flora im Gewässer beeinträchtigt werden können. Beispielsweise ist beim Aufstauen eines Gewässers die Wanderung von Fischen im Gewässer nicht mehr uneingeschränkt sicher möglich. In der Regel müssen hierfür zusätzliche Vorkehrungen getroffen werden, wie beispielsweise eine Fischtreppe.

WO 2008/133419 A1 offenbart ein Wasserkraftwerk, bei welchem eine Vielzahl von Wasseraufnahmeplatten an einer langgestreckten geschlossenen Kette montiert sind, welche auf einer Wasseroberfläche schwimmt, so dass die Kette durch Wasserkraft in Bewegung versetzt wird.

Solche Wasserkraftwerke haben jedoch eine Vielzahl von Teilen, so dass die Wasserkraftwerke eine komplizierte Konstruktion haben. Dies erschwert und verteuert deren Herstellung. Darüber hinaus wird deren Wartung aufwändiger und damit verteuert.

Zudem kann es bei bekannten Wasserkraftwerken immer wieder vorkommen, dass sich Fische an den Anlagenteilen verletzen oder gar in die Anlage geraten und nicht mehr herausfinden. Letzteres kann, je nach Bau der Anlage, auch zum Anlagenstillstand führen. Um alles dies zu vermeiden, müssen aufwändige Schutzvorrichtungen geschaffen werden, welche sowohl die Herstellung als auch die Wartung des Wasserkraftwerks verkomplizieren und damit verteuern.

Es ist daher Aufgabe der Erfindung, ein Strömungskraftwerk und ein Verfahren zur Wandlung von Strömung eines flüssigen oder gasförmigen Mediums in mechanische und/oder elektrische Energie zur Verfügung zu stellen, bei welchen das Strömungskraftwerk einfach konstruiert ist, und bei welchen minimale Eingriffe in das Medium notwendig sind, um zu ermöglichen, dass aus der Strömung des Mediums mechanische und/oder elektrische Energie ohne Aufstauen des Mediums erzeugt wird.

Diese Aufgabe wird durch ein Strömungskraftwerk zur Wandlung von Strömung eines flüssigen oder gasförmigen Mediums in mechanische und/oder elektrische Energie nach Patentanspruch 1 gelöst.

Das zuvor beschriebene Strömungskraftwerk ist sehr einfach aufgebaut und hat eine geringe Anzahl von Teilen, die zudem kostengünstig sind. Noch dazu ist die Wartung des Strömungskraftwerks sehr einfach und unaufwändig.

Darüber hinaus ist es bei dem zuvor genannten Strömungskraftwerk nicht erforderlich, das Medium aufzustauen. Dies ist besonders vorteilhaft bei einem Fließgewässer, da hier Fauna und Flora im Gewässer kaum beeinträchtigt werden. Es besteht praktisch kein Verletzungsrisiko für Fische und sonstige Lebewesen im Gewässer. Es ist gewährleistet, dass Fische oder sonstige Wassertiere im Gewässer uneingeschränkt sicher wandern können. Es sind hierfür keine zusätzlichen Vorkehrungen erforderlich, wie beispielsweise eine Fischtreppe. Damit können auch bestehende gesetzliche Vorgaben erfüllt werden.
Zudem kann mit dem Strömungskraftwerk auf sichere Weise ein guter Wirkungsgrad erzielt werden, so dass das Strömungskraftwerk sehr wirtschaftlich mechanische und/oder elektrische Energie aus einer Strömung eines flüssigen oder gasförmigen Mediums erzeugen kann. Vorteilhafte weitere Ausgestaltungen des Strömungskraftwerks sind in den abhängigen Patentansprüchen angegeben.
Vorzugsweise ist die erste und zweite Halteeinrichtung jeweils in Strömungsrichtung mit einem vorbestimmten Abstand zu einem Rand des Flügels an dem Flügel angeordnet. Dadurch wird die Bewegungsumkehr des Flügels zwischen einem oberen und unteren Totpunkt verbessert. Die erste Halteeinrichtung ist stromaufwärts der zweiten Halteeinrichtung an dem Flügel angeordnet. Diese Anordnung verbessert eine Bewegung des Flügels in der Strömung und ein Umsetzen der Bewegung in eine Drehung einer Kurbelwelle eines Generators zur Erzeugung elektrischer Energie.
Der Flügel kann sich in der Strömung zwischen einem oberen und einem unteren Totpunkt bewegen, die auf den Schenkeln eines Vs liegen, dessen Spitze entgegen der Strömungsrichtung gerichtet ist.
Die erste Halteeinrichtung kann an dem Flügel an zwei sich gegenüberliegenden Punkten befestigt sein, die an in Strömungsrichtung ausgerichteten Rändern des Flügels angeordnet sind, und die zweite Halteeinrichtung kann an dem Flügel an einem Punkt im Bereich seiner in Strömungsrichtung angeordneten Mittellinie befestigt sein. Alternativ kann die zweite Halteeinrichtung an dem Flügel an zwei sich gegenüberliegenden Punkten befestigt sein, die an in Strömungsrichtung ausgerichteten Rändern des Flügels angeordnet sind, und die erste Halteeinrichtung kann an dem Flügel an einem Punkt im Bereich seiner in Strömungsrichtung angeordneten Mittellinie befestigt sein.
Es ist vorteilhaft, wenn die erste Halteeinrichtung ein Seil umfasst, an welchem der Flügel an einem Punkt aufgehängt ist. Dadurch ist eine besonders flexible bzw. freie Aufhängung des Flügels in der Strömung gegeben.
Zudem ist es vorteilhaft, wenn die zweite Halteeinrichtung eine Stange umfasst zur Übertragung der Bewegung des Flügels in der Strömung auf eine Kurbelwelle. Damit kann die Bewegung des Flügels weitgehend verlustfrei auf die Kurbelwelle übertragen werden. Dies trägt zur Optimierung des Wirkungsgrads des Strömungskraftwerks bei.
Es ist möglich, dass das Strömungskraftwerk zudem ein Schwungrad hat, dessen Achse die Kurbelwelle bildet und an welchem die Stange der zweiten Halteeinrichtung mit einem vorbestimmten Abstand zur Achse schwenkbar gelagert ist. Das Schwungrad kann zum einen als Initiator einer Bewegungsumkehr des Flügels an einem oberen und unteren Totpunkt dienen. Zum anderen kann der Flügel das Schwungrad drehen und so die auf den Flügel wirkende Strömungskraft in mechanische Energie und bei Bedarf auch in elektrische Energie umsetzen. Bevorzugt hat das Strömungskraftwerk einen Generator zur Wandlung der Drehung der Kurbelwelle in elektrische Energie.
Das Strömungkraftwerk kann ein Fließwasserkraftwerk und das Medium ein Fließgewässer sein. Es ist jedoch auch möglich, dass das Strömungkraftwerk ein Windkraftwerk und das Medium Luft ist. Die Aufgabe wird zudem durch ein Verfahren zur Wandlung von Strömung eines flüssigen oder gasförmigen Mediums in mechanische und/oder elektrische Energie nach Patentanspruch 10 gelöst.

Nachfolgend ist die Erfindung unter Bezugnahme auf die beiliegende Zeichnung und anhand von Ausführungsbeispielen näher beschrieben. Es zeigen:
Fig. 1 eine schematische Seitenansicht eines Strömungskraftwerks gemäß einem ersten Ausführungsbeispiel;
Fig. 2 eine schematische Draufsicht auf das Strömungskraftwerk gemäß dem ersten Ausführungsbeispiel; und
Fig. 3 eine schematische Seitenansicht eines Strömungskraftwerks gemäß einem zweiten Ausführungsbeispiel;.

In den Figuren sind gleiche und gleichbedeutende Teile mit den gleichen Bezugszeichen versehen. Die in den Figuren gezeigten Abmessungen sind schematisch, das heißt die tatsächlichen Größenverhältnisse der in den Figuren gezeigten Teile können anders als dargestellt sein.

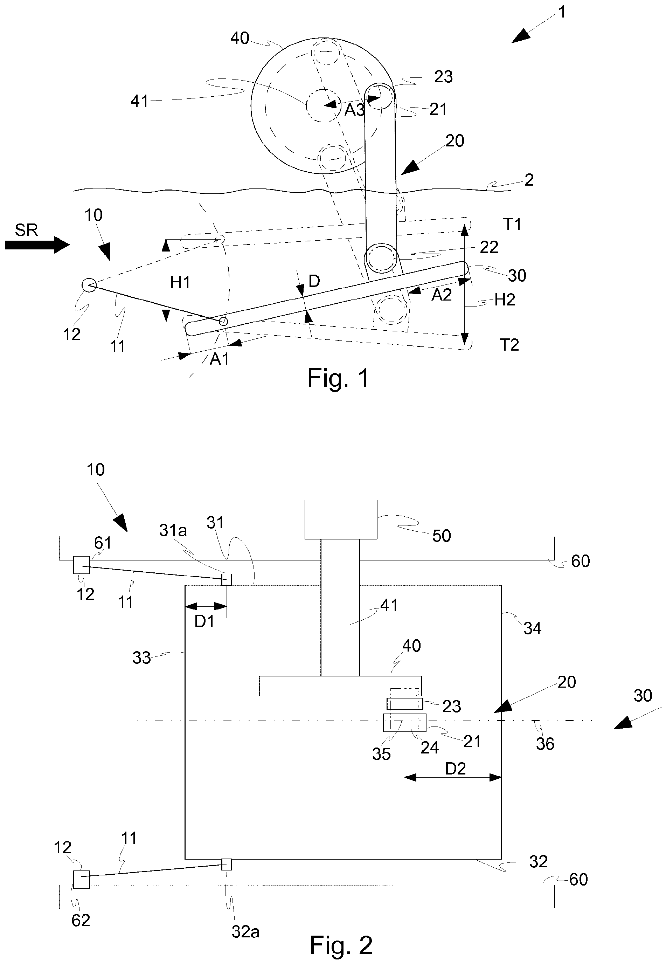

Fig. 1 zeigt ein Strömungskraftwerk 1 zur Wandlung von Strömung eines flüssigen oder gasförmigen Mediums 2 in mechanische und/oder elektrische Energie. In Fig. 1 ist das Strömungskraftwerk 1 ein Fließwasserkraftwerk und das Medium 2 ein Fließgewässer, dessen Strömungsrichtung mit einem schwarzen Blockpfeil angegeben ist. Das Strömungskraftwerk 1 hat eine erste Halteeinrichtung 10, eine zweite Halteeinrichtung 20, einen Flügel 30 und ein Schwungrad 40, dessen Achse eine Kurbelwelle 41 ist. Die erste und zweite Halteeinrichtung 10, 20 und der Flügel 30 sind in Fig. 1 im Medium 2, also dem Fließgewässer, angeordnet, wohingegen das Schwungrad 40 und die Kurbelwelle 41 oberhalb des Mediums 2 angeordnet sind.

In Fig. 1 ist die erste Halteeinrichtung 10 stromaufwärts der zweiten Halteeinrichtung 20 angeordnet. Die erste Halteeinrichtung 10 hat ein Seil 11 und eine Befestigungseinrichtung 12. Das Seil 11 ist sowohl an dem Flügel 30 als auch der Befestigungseinrichtung 12 befestigt und verbindet diese. Die Befestigungseinrichtung 12 ist in dem Medium 2 angeordnet. Die zweite Halteeinrichtung 20 hat eine Stange 21 und ein erstes und zweites Schwenklager 22, 23. Die Stange 21 ist über das erste Schwenklager 22 mit dem Flügel 30 verbunden. Zudem ist die Stange 21 über das zweite Schwenklager 23 mit dem Schwungrad 40 verbunden. Das erste und zweite Schwenklager 22, 23 dienen zur schwenkbaren Lagerung der Stange 21 zwischen Flügel 30 und Schwungrad 40.

Der Flügel 30 ist somit an der ersten und zweiten Halteeinrichtung 10, 20 frei aufgehängt. Das bedeutet, dass die erste Halteeinrichtung 10 und die zweite Halteeinrichtung 20 derart an dem Flügel 30 angeordnet sind, dass sich der Flügel 30 in der Strömung des Mediums 2 zwischen einem oberen Totpunkt T1 und einem unterem Totpunkt T2 bewegen kann. Die Stellung des Flügels 30 am oberen Totpunkt T1 und am unterem Totpunkt T2 ist in Fig. 1 mit gestrichelten Linien dargestellt. Demzufolge befindet sich die Stange 21 und das Schwenklager 23 bei der Drehung des Schwungrads 40 um seine Achse am oberen Totpunkt T1 an ihrem oberen Wendepunkt, wie aus Fig. 1 ersichtlich. Am unteren Totpunkt T2 befindet sich die Stange 21 und das Schwenklager 23 bei der Drehung des Schwungrads 40 um seine Achse an ihrem unteren Wendepunkt, wie aus Fig. 1 ersichtlich.

Am oberen Totpunkt T1 und am unteren Totpunkt T2 erfolgt jeweils eine Umkehr der Bewegung des Flügels 30 zwischen den beiden Totpunkten T1, T2. Dies wird dadurch erzielt, dass das Schwungrad 40, das auch Schwungmasse genannt werden kann, durch seine Drehung und die Befestigung der Stange 21 an einem anderen Punkt als dem Mittelpunkt des Schwungrads 40, wie in Fig. 1 gezeigt, den Flügel 30 eigentlich über den Totpunkt T1 heben würde und den Flügel 30 unter den Totpunkt T2 schieben würde. Da jedoch das Seil 11 der ersten Halteeinrichtung 10 kurz genug gehalten ist, erfolgt an den Totpunkten T1, T2 eine Schrägstellung des Flügels 30. Durch die freie Aufhängung des Flügels 30 mittels der ersten und zweiten Halteeinrichtung 10, 20 und die auf den Flügel 30 wirkende Strömung des Mediums 2 erfolgt an den Totpunkten T1, T2 jeweils eine Bewegungsumkehr der vorangegangenen Bewegung des Flügels 30. Die Bewegung des Flügels 30 treibt wiederum das Schwungrad 40 an.

Hierzu ist die erste Halteeinrichtung 10 mit einem ersten vorbestimmten Abstand A1 vom Rand des Flügels 30 angeordnet. Der vorbestimmte Abstand A1 befindet sich am Anfang des Flügel 30 in Strömungsrichtung SR des Mediums 2 gesehen. Die zweite Halteeinrichtung 20 ist mit einem zweiten vorbestimmten Abstand A2 zum Rand des Flügels 30 an dem Flügel 30 befestigt. Der erste vorbestimmte Abstand A1 und der zweite vorbestimmte Abstand A2 sind in Fig. 1 unterschiedlich, wobei der vorbestimmte Abstand A1 kleiner als der vorbestimmte Abstand A2 ist. Die Stange 21 ist mit einem vorbestimmten Abstand A3 zur Achse des Schwungrads 40, der Kurbelwelle 41, an dem Schwungrad 40 schwenkbar gelagert. Der Flügel 30 hat im Wesentlichen auf seiner ganzen Länge, in Strömungsrichtung SR gesehen, die gleiche Dicke D.

Die Aufhängungen des Flügels 30 mittels der ersten und zweiten Halteeinrichtung 10, 20 sind also aufeinander und auf die Strömungsgeschwindigkeit des Mediums 2 abgestimmt. Die Befestigungseinrichtung 12 der ersten Halteeinrichtung 10 ist vor dem Flügel 30 in Strömungsrichtung SR angeordnet, d. h. stromaufwärts des Flügels 30, wobei sich der Flügel 30 in einem Bereich oberhalb und unterhalb der Befestigungseinrichtung 12 bewegen kann. Dies ist in Fig. 1 durch die gestrichelte Bogenlinie angedeutet. Genauer gesagt, kann sich die Flügel 30 in der Strömung sowohl vor und zurück, also stromabwärts und stromaufwärts, als auch nach oben und unten, also quer zur Strömung, bewegen. Es sind selbstverständlich auch alle Überlagerungen solcher Bewegungen möglich. Dies ist durch die sehr flexible Aufhängung des Flügels 30 mittels des Seils 11 der ersten Halteeinrichtung 10 und die Lagerung der Stange 21 der zweiten Halteeinrichtung 20 über die Schwenklager 22 und 23 gegeben.

Durch die zuvor beschriebene Anordnung des Flügels 30 an der ersten und zweiten Halteeinrichtung 10, 20 schränkt die erste Halteeinrichtung 10 eine Auslenkung des Flügels 30 quer zur Strömung des Mediums 2 mehr ein als die zweite Halteeinrichtung 20. Das heißt, der von der ersten Halteeinrichtung 10 zugelassene Hub H1 ist kleiner als der von der zweiten Halteeinrichtung 20 zugelassene Hub H2. Demzufolge sind der obere Totpunkt T1 und der untere Totpunkt T2 auf den Schenkeln eines Vs angeordnet, dessen Spitze entgegen der Strömungsrichtung SR gerichtet ist.

Fig. 2 zeigt in einer Draufsicht auf das Strömungskraftwerk 1, dass die Kurbelwelle 41 mit einem Generator 50 verbunden ist. Der Generator 50 kann die mechanische Energie des Schwungrads 40, die durch seine Drehbewegung erzeugt wird, in elektrische Energie umwandeln. Anders ausgedrückt, der Generator 50 dient zur Wandlung der Drehung der Kurbelwelle 41 in elektrische Energie.

In Fig. 2 ist der Flügel 30 eine rechteckige Platte. Die erste Halteeinrichtung 10 hat zwei Seile 11, die jeweils an der Begrenzung 60 des Mediums 2 an einem Punkt 61, 62 oder Ort 61, 62 befestigt sind. In Fig. 2 ist die Begrenzung 60 des Mediums 2 das Ufer 60 des Fließgewässers 2. Die Punkte 61, 62 liegen sich am Ufer 60 gegenüber. Die Seile 11 sind an den Rändern 31, 32 des Flügels 30 befestigt. Zudem sind die Seile 11 mit dem ersten vorbestimmten Abstand A1 vom Rand 33 des Flügels 30 beabstandet. Die Stange 21 ist mit dem zweiten vorbestimmten Abstand A2 vom Rand 34 des Flügels 30 beabstandet. Die Stange 21, und somit die zweite Halteeinrichtung 20, ist an dem Flügel 30 an einem Punkt 35 auf der Mittellinie 36 des Flügels befestigt.

Auf die zuvor beschriebene Weise kann eine Bewegung des Flügels 30 in der Strömung des Mediums 2 in eine Drehung der Kurbelwelle 41 umgesetzt werden.

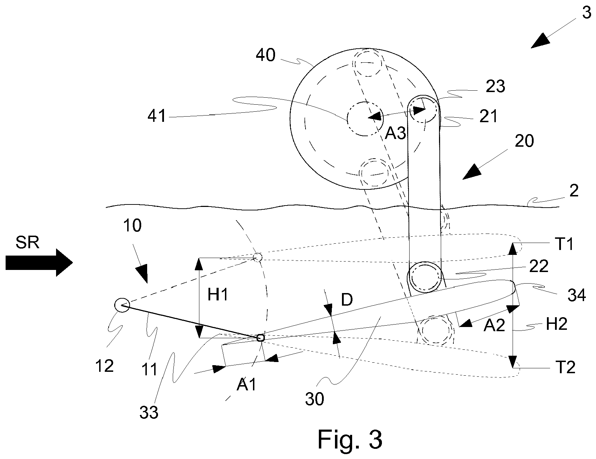

In Fig. 3 ist ein Strömungskraftwerk 3 gemäß dem zweiten Ausführungsbeispiel veranschaulicht. Das Strömungskraftwerk 3 hat die gleichen Teile, wie in Fig. 1 und Fig. 2 gezeigt. Daher sind gleiche und gleichbedeutende Teile in beiden Ausführungsbeispielen mit den gleichen Bezugszeichen versehen. Der Unterschied zwischen dem ersten und zweiten Ausführungsbeispiel besteht darin, dass bei dem vorliegenden Ausführungsbeispiel der Flügel 30 nicht als rechteckige Platte ausgeführt ist, welche im Wesentlichen auf ihrer ganzen Länge die gleiche Dicke D hat. Das heißt, bei dem vorliegenden Ausführungsbeispiel hat der Flügel 30 einen keulenförmigen Querschnitt. Das heißt, der Flügel 30 hat an seinem der Strömung zugewandten Rand 33 den geringsten Querschnitt und läuft an dem Rand 33 spitz zu. An seinem der Strömung abgewandten Rand 34 ist der Flügel 30 abgerundet. Zwischen den beiden Rändern 33, 34 hat der Flügel 30 seinen größten Querschnitt, wie in Fig. 3 dargestellt. Ansonsten ist das Strömungskraftwerk 3 gemäß dem vorliegenden Ausführungsbeispiel auf die gleiche Weise aufgebaut wie das Strömungskraftwerk 1 gemäß dem ersten Ausführungsbeispiel. Es sind folgende Modifikationen denkbar. In den Figuren ist die Erfindung anhand eines Fließwasserkraftwerks beschrieben. Es ist jedoch selbstverständlich, dass das Fließgewässer jedes Gewässer umfasst, in welchem eine Strömung vorhanden ist, die mit dem zuvor geschriebenen Strömungskraftwerk nutzbar ist. Die Erfindung umfasst außerdem auch Windkraftwerke.
Bei der ersten Halteeinrichtung müssen die Seile 11 nicht an den Rändern 31, 32 des Flügels 30 befestigt sein, wie in Fig. 2 gezeigt, also außen an den Rändern 31, 32 des Flügels 30. Die Seile 11 können auch in einem Bereich der Ränder 31, 32 oben an dem Flügel 30 befestigt sein. Die Seile 11 können auch unten an dem Flügel 30 befestigt sein, wenn das Seil 11 entweder durch eine Bohrung in dem Flügel 30 hindurch oder außen an dem Flügel 30 entlang nach oben geführt wird. Die Seile 11 können auch nur an einem Punkt an der Begrenzung 60 des Mediums 2 befestigt sein.
Die erste Halteeinrichtung 10 kann auch anstelle eines Seils 11 eine Stange umfassen. Somit wären die erste und zweite Halteeinrichtung gleich flexibel bzw. starr. Es ist auch möglich, dass das Seil 11 als Feder, insbesondere Spiralfeder, Blattfeder usw., ausgeführt ist. In diesen Fällen ist es auch möglich, dass die erste Halteeinrichtung 10 den Flügel 30 von unten hält. Der Flügel 30 ist dann nicht mit der Halteeinrichtung 10 an einem festen Punkt aufgehängt sondern von unten gestützt.

Auch die zweite Halteeinrichtung 20 kann, wie die erste Halteeinrichtung 10, den Flügel 30 nur von unten halten. Der Flügel 30 ist dann nicht mit der zweiten Halteeinrichtung 20 an einem festen Punkt aufgehängt sondern von unten gestützt.

Alternativ zu der in den Figuren gezeigten Anordnung kann die zweite Halteeinrichtung 20 an dem Flügel 30 an zwei sich gegenüberliegenden Punkten befestigt sein, die an in Strömungsrichtung ausgerichteten Rändern des Flügels 30 angeordnet sind. In diesem Fall kann die erste Halteeinrichtung 10 an dem Flügel 30 nur an einem Punkt 35 im Bereich seiner in Strömungsrichtung (SR) angeordneten Mittellinie 36 befestigt sein.

Zudem muss auch die Stange 21 der zweiten Halteeinrichtung 20 nicht genau auf der Mittellinie 36 des Flügels 30 angeordnet sein. Sie kann auch nur in der Nähe der Mittellinie 36, also im Bereich der Mittellinie 36 angeordnet sein.

Alternativ zu der in Fig. 3 gezeigten Anordnung des Flügels 30 kann der Flügel 30 auch an seinem der Strömung abgewandten Rand 34 den geringsten Querschnitt haben und läuft an dem Rand 34 spitz zu. In diesem Fall ist der Flügel 30 an seinem der Strömung zugewandten Rand 33 abgerundet.

Der Flügel 30 kann aus Kunststoff, Holz, Metall, insbesondere Aluminium, Edelstahl, usw., gefertigt sein. Insbesondere ist für den Flügel jedes sonstigen nicht oder nur wenig rostenden Material geeignet. Der Flügel 30 kann auch nur an der Oberfläche mit einem solchen Material überzogen sein.

Der Flügel 30 kann eine gewellte oder glatte Oberfläche haben. Der Flügel 30 kann auch eine sonstige strukturierte Oberfläche haben. Der Flügel 30 kann insbesondere eine rechteckige Platte sein, wie in Fig. 1 und 2 gezeigt. Der Flügel 30 kann jedoch auch mehr oder weniger als vier Ecken haben. Der Flügel 30 kann beispielsweise auch oval sein oder zumindest eine seiner Ecken kann abgerundet sein. Insbesondere kann der Flügel 30 auch unsymmetrisch sein. Dadurch liegen sich die Punkte 61, 62 an der Begrenzung 60 des Mediums 2 schräg gegenüber.

## Patentansprüche

1. Strömungskraftwerk (1; 3) zur Wandlung von Strömung eines flüssigen oder gasförmigen Mediums (2) in mechanische und/oder elektrische Energie, mit
einem Flügel (30),
einer ersten Halteeinrichtung (10) zum Halten des Flügels (30) in der Strömung, wobei die erste Halteeinrichtung (10) an dem Flügel (30) befestigt ist und eine Befestigungseinrichtung (12) zur Befestigung der ersten Halteeinrichtung (10) in dem Medium (2) umfasst, wobei die Befestigungseinrichtung (12) stromaufwärts des Flügels (30) angeordnet ist, und
einer zweiten Halteeinrichtung (20) zum Halten des Flügels (30) in der Strömung, wobei die zweite Halteeinrichtung (20) mittels schwenkbarer Lagerung mit dem Flügel (30) und mittels schwenkbarer Lagerung mit einem Schwungrad (40) an einem vom Mittelpunkt des Schwungrads (40) beabstandeten Punkt verbunden ist,
wobei die erste und zweite Halteeinrichtung (10, 20) an dem Flügel (30) in Strömungsrichtung (SR) derart beabstandet zueinander angeordnet sind, dass die erste Halteeinrichtung (10) stromaufwärts der zweiten Halteeinrichtung (20) an dem Flügel (30) angeordnet ist, wobei die erste und zweite Halteeinrichtung (10, 20) beim Betrieb des Strömungskraftwerks (1; 3) bei der ersten Halteeinrichtung (10) einen kleineren Hub (H1) des Flügels (30) quer zur Strömung des Mediums (2) und zwischen einem oberen und unteren (Totpunkt T1, T2) einer Bewegung des Flügels (30) zulassen als bei der zweiten Halteeinrichtung (20), und
wobei die erste und zweiten Halteeinrichtung (10, 20) beim Betrieb des Strömungskraftwerks (1; 3) eine Bewegung des Flügels (30) in einem Bereich oberhalb und unterhalb der Befestigungseinrichtung (12) in der Strömung sowohl vor und zurück, also stromabwärts und stromaufwärts, als auch nach oben und unten, also quer zur Strömung, sowie Überlagerungen solcher Bewegungen des Flügels (30) in der Strömung ermöglicht.

2. Strömungskraftwerk (1; 3) nach Anspruch 1, wobei die erste und zweite Halteeinrichtung (10, 20) jeweils in Strömungsrichtung (SR) mit einem vorbestimmten Abstand (A1, A2) zu einem Rand (33, 34) des Flügels (30) an dem Flügel (30) angeordnet sind.

3. Strömungskraftwerk (1; 3) nach Anspruch 1 oder 2, wobei die zweite Halteeinrichtung (20) eine Stange (21) umfasst zur Übertragung der Bewegung des Flügels (30) in der Strömung auf eine Kurbelwelle (41).

4. Strömungskraftwerk (1; 3) nach Anspruch 3, wobei die erste Halteeinrichtung (10) flexibler als die zweite Halteeinrichtung (20) ausgestaltet ist, und wobei sich der Flügel (30) in der Strömung zwischen dem oberen und dem unteren Totpunkt (T1, T2) bewegen kann, die auf den Schenkeln eines Vs liegen, dessen Spitze entgegen der Strömungsrichtung (SR) gerichtet ist.

5. Strömungskraftwerk (1; 3) nach Anspruch 3 oder 4, wobei die erste Halteeinrichtung (10) an dem Flügel (30) an zwei sich gegenüberliegenden Punkten (31a, 32a) befestigt ist, die an in Strömungsrichtung ausgerichteten Rändern (31, 32) des Flügels (30) angeordnet sind, und die zweite Halteeinrichtung (20) an dem Flügel (30) an einem Punkt (35) im Bereich seiner in Strömungsrichtung angeordneten Mittellinie (36) befestigt ist, oder wobei die zweite Halteeinrichtung (20) an dem Flügel (30) an zwei sich gegenüberliegenden Punkten befestigt ist, die an in Strömungsrichtung (SR) ausgerichteten Rändern (31, 32) des Flügels angeordnet sind, und wobei die erste Halteeinrichtung (10) an dem Flügel (30) an einem Punkt (35) im Bereich seiner in Strömungsrichtung angeordneten Mittellinie (36) befestigt ist.

6. Strömungskraftwerk (1; 3) nach einem der vorangehenden Ansprüche,
wobei die erste Halteeinrichtung (10) ein Seil (11) umfasst, an welchem der Flügel (30) an einem Punkt (31a) aufgehängt ist, oder wobei die erste Halteeinrichtung (10) als Feder ausgeführt ist oder eine Stange (21) umfasst, an welcher der Flügel (30) an einem Punkt (31a) aufgehängt oder gestützt ist.

7. Strömungskraftwerk (1; 3) nach einem der vorangehenden Ansprüche, wobei die Achse des Schwungrads (40) eine Kurbelwelle (41) bildet und wobei an dem Schwungrad (40) eine Stange (21) der zweiten Halteeinrichtung (20) mit einem vorbestimmten Abstand (A3) zur Achse schwenkbar gelagert ist.

8. Strömungskraftwerk (1; 3) nach Anspruch 7, zudem mit einem Generator (50) zur Wandlung der Drehung der Kurbelwelle (41) in elektrische Energie.

9. Strömungskraftwerk (1; 3) nach einem der vorangehenden Ansprüche, wobei das Strömungskraftwerk (1; 3) ein Fließwasserkraftwerk und das Medium (2) ein Fließgewässer ist oder das Strömungskraftwerk (1; 3) ein Windkraftwerk und das Medium (2) Luft ist.

10. Verfahren zur Wandlung von Strömung eines flüssigen oder gasförmigen Mediums (2) in mechanische und/oder elektrische Energie mit einem Strömungskraftwerk nach einem der Ansprüche 1 bis 9, mit dem Schritt
Halten des Flügels (30) in der Strömung mittels der ersten und zweiten Halteeinrichtung (10, 20), wobei die Befestigungseinrichtung (12) der ersten Halteeinrichtung (10) in dem Medium (2) angeordnet ist und den Flügel (30) stromaufwärts des Flügels (30) befestigt,
wobei die Anordnung der ersten und zweiten Halteeinrichtung (10, 20) bei der ersten Halteeinrichtung (10) einen kleineren Hub (H1) des Flügels (30) quer zur Strömung des Mediums (2) und zwischen einem oberen und unteren Totpunkt (T1, T2) einer Bewegung des Flügels (30) zulässt als bei der zweiten Halteeinrichtung (20), und
wobei die Anordnung und Ausgestaltung der ersten und zweiten Halteeinrichtung (10, 20) eine Bewegung des Flügels (30) in einem Bereich oberhalb und unterhalb der Befestigungseinrichtung (12) in der Strömung sowohl vor und zurück, also stromabwärts und stromaufwärts, als auch nach oben und unten, also quer zur Strömung, sowie Überlagerungen solcher Bewegungen des Flügels (30) in der Strömung ermöglicht.

## Claims

1. A power plant (1; 3) for converting the flow of a fluid or gaseous medium (2) into mechanical and/or electrical energy, the power plant (1; 3), comprising
a wing (30),
a first holding means (10) for holding the wing (30) in the flow, wherein the first holding means (10) is fastened to the wing (30) and comprises a fastening means (12) for fastening the first holding means (10) in the medium, wherein the fastening means (12) is positioned upstream of the wing (30),
a second holding means (20) for holding the wing (30) in the flow, wherein the second holding means (20) is connected, by pivotable support to the wing (30) and by pivotable support to a fly wheel (40), at a spot spaced from the center of the fly wheel (40),
wherein the first and second holding means (10, 20) are positioned spaced to each other at the wing (30) in a direction of flow (SR) such that the first holding means (10) is positioned at the wing (30) upstream of the second holding means (20), wherein the first and second holding means (10, 20) allow in operation of the power plant (1; 3) a stroke (H1) of the wing (30) transverse to the flow of the medium (2) and between an upper and lower dead center (T1, T2), the stroke (H1) being smaller at the first holding means (10) than at the second holding means (20), and
wherein the first and second holding means (10, 20) enable in operation of the power plant (1; 3) a motion of the wing (30) in an area above and beneath the fastening means (12) in the flow, the motion being both back and forth, that is downstream and upstream, and up and down, that is transverse to the flow, as well as superpositions of such motions of the wing (30) in the flow.

2. The power plant (1; 3) according to claim 1, wherein the first and second holding means (10, 20) are each positioned at the wing (30) with a predetermined distance (A1, A2) to an edge (33, 34) of the wing (30) in the direction of flow (SR).

3. The power plant (1; 3) according to claim 1 or 2, wherein the second holding means (20) comprises a rod (21) for transmitting to a crankshaft (41) the motion of the wing (30) in the flow.

4. The power plant (1; 3) according to any claim 3, wherein the first holding means (10) is configured more flexible than the second holding means (10, 20), and wherein the wing (30) can move in the flow between the upper and the lower dead centers (T1, T2) which are positioned on the legs of a V, the tip of which is directed against the direction of flow (SR).

5. The power plant (1; 3) according to claim 3 or 4, wherein the first holding means (10) is fastened to the wing (30) at two spots (31a, 32a) which are positioned opposite to each other and which are positioned at edges (31, 32) of the wing (30) which are directed in the direction of flow, and the second holding means (20) is fastened to the wing (30) at a spot (35) in an area of its center line (36) which is positioned in the direction of flow, or wherein the second holding means (20) is fastened to the wing (30) at two spots (35) which are positioned opposite to each other and which are positioned at edges (31, 32) of the wing (30) which are directed in the direction of flow (SR), and wherein the first holding means (10) is fastened to the wing (30) at a spot (35) in an area of its center line (36) which is positioned in the direction of flow.

6. A power plant (1; 3) according to any one of the preceding claims, wherein the first holding means (10) comprises a rope (11) at which the wing (30) is suspended at a spot (31a), or wherein the first holding means (10) is configured as a spring or comprises a rod (21), at which the wing (30) is suspended or supported at a spot (31a).

7. A power plant (1; 3) according to any one of the preceding claims, wherein the axis of the fly wheel (40) forms a crankshaft (41) and wherein a rod (21) of the second holding means (20) is pivotably supported with a predetermined distance (A3) to the axis.

8. A power plant (1; 3) according to claim 7, further comprising a generator (50) for converting the rotation of the crankshaft (41) into electrical energy.

9. A power plant (1; 3) according to any one of the preceding claims, wherein the power plant (1; 3) is a flowing water power plant and the medium (2) is a streaming water or the power plant (1; 3) is a wind power station and the medium (2) is air.

10. A method for converting the flow of a fluid or gaseous medium (2) into mechanical and/or electrical energy by means of a power plant according to any one of the claims 1 to 9, the method comprising the step of
holding, by the first and second holding means (10, 20), the wing (30) in the flow,
wherein the fastening means (12) of the first holding means (10) is positioned in the medium and fastens the wing (30) upstream of the wing (30),
wherein the arrangement of the first and second holding means (10, 20) allows a stroke (H1) of the wing (30) transverse to the flow of the medium (2) and between an upper and lower dead center (T1, T2), the stroke (H1) being smaller at the first holding means (10) than at the second holding means (20), and
wherein the arrangement and configuration of the first and second holding means (10, 20) enable a motion of the wing (30) in an area above and beneath the fastening means (12) in the flow, the motion being both back and forth, that is downstream and upstream, and up and down, that is transverse to the flow, as well as superpositions of such motions of the wing (30) in the flow.

## Revendications

1. Centrale à écoulement (1; 3) destinée à transformer l'écoulement d'un milieu (2) liquide ou gazeux en énergie mécanique et/ou électrique, comprenant
une pale (30),
un premier dispositif de retenue (10) destiné à retenir la pale (30) dans l'écoulement, le premier dispositif de retenue (10) étant fixé à la pale (30) et comportant un dispositif de fixation (12) destiné à fixer le premier dispositif de retenue (10) dans le milieu (2), le dispositif de fixation (12) étant agencé en amont de la pale (30), et
un deuxième dispositif de retenue (20) destiné à retenir la pale (30) dans l'écoulement, le deuxième dispositif de retenue (20) étant relié à la pale (30) au moyen d'un palier pivotant et à un volant d'inertie (40) au moyen d'un palier pivotant, en un point espacé du centre du volant d'inertie (40),
dans laquelle le premier et le deuxième dispositif de retenue (10, 20) sont agencés à distance l'un de l'autre sur la pale (30) dans le sens d'écoulement (SR), de telle manière que le premier dispositif de retenue (10) est agencé en amont du deuxième dispositif de retenue (20) sur la pale (30), le premier et le deuxième dispositif de retenue (10, 20), lorsque la centrale à écoulement (1; 3) est en fonctionnement, permettant, pour le premier dispositif de retenue (10), une course (H1) de la pale (30) transversalement à l'écoulement du milieu (2) et entre un point mort haut et un point mort bas (T1, T2) d'un déplacement de la pale (30) plus réduite que pour le deuxième dispositif de retenue (20), et
dans laquelle le premier et le deuxième dispositif de retenue (10, 20), lorsque la centrale à écoulement (1; 3) est en fonctionnement, permettent un déplacement de la pale (30) dans une zone située au-dessus et au-dessous du dispositif de fixation (12) dans l'écoulement aussi bien en avant qu'en arrière, par conséquent en aval et en amont, que vers le haut et vers le bas, par conséquent transversalement à l'écoulement, ainsi que des superpositions de ces déplacements de la pale (30) dans l'écoulement.

2. Centrale à écoulement (1; 3) selon la revendication 1, dans laquelle le premier et le deuxième dispositif de retenue (10, 20) sont agencés sur la pale respectivement dans le sens d'écoulement (SR) à une distance (A1, A2) prédéfinie d'un bord (33, 34) de la pale (30).

3. Centrale à écoulement (1; 3) selon la revendication 1 ou 2, dans laquelle le deuxième dispositif de retenue (20) comporte une barre (21) pour la transmission du déplacement de la pale (30) dans l'écoulement sur un vilebrequin (41).

4. Centrale à écoulement (1; 3) selon la revendication 3, dans laquelle le premier dispositif de retenue (10) est plus flexible que le deuxième dispositif de retenue (20), et dans laquelle la pale (30) peut se déplacer dans l'écoulement entre les point mort haut et point mort bas (T1, T2) qui se situent sur les branches d'un V dont la pointe est orientée à l'opposé du sens d'écoulement (SR).

5. Centrale à écoulement (1; 3) selon la revendication 3 ou 4, dans laquelle le premier dispositif de retenue (10) est fixé à la pale (30) en deux points (31a, 32a) opposés, qui sont ménagés sur les bords (31, 32) de la pale (30) orientés dans le sens d'écoulement, et le deuxième dispositif de retenue (20) est fixé à la pale (30) en un point (35) dans la zone de la ligne médiane (36) de celle-ci ménagée dans le sens d'écoulement, ou dans laquelle le deuxième dispositif de retenue (20) est fixé à la pale (30) en deux points opposés, qui sont ménagés sur les bords (31, 32) de la pale orientés dans le sens d'écoulement (SR), et le premier dispositif de retenue (10) est fixé à la pale (30) en un point (35) dans la zone de la ligne médiane (36) de celle-ci ménagée dans le sens d'écoulement.

6. Centrale à écoulement (1; 3) selon l'une quelconque des revendications précédentes,
dans laquelle le premier dispositif de retenue (10) comporte un câble (11) auquel la pale (30) est suspendue en un point (31a), ou dans laquelle le premier dispositif de retenue (10) est réalisé sous la forme d'un ressort ou comporte une barre (21) à laquelle la pale (30) est suspendue ou sur laquelle elle est en appui en un point (31a).

7. Centrale à écoulement (1; 3) selon l'une quelconque des revendications précédentes, dans laquelle l'axe du volant d'inertie (40) forme un vilebrequin (41) et dans laquelle une barre (21) du deuxième dispositif de retenue (20) est montée pivotante sur le volant d'inertie (40) selon un écart (A3) prédéfini par rapport à l'axe.

8. Centrale à écoulement (1; 3) selon la revendication 7, comprenant en outre un générateur (50) destiné à transformer la rotation du vilebrequin (41) en énergie électrique.

9. Centrale à écoulement (1; 3) selon l'une quelconque des revendications précédentes, dans laquelle la centrale à écoulement (1; 3) est une centrale hydroélectrique et le milieu (2) un cours d'eau ou la centrale à écoulement (1; 3) est une éolienne et le milieu (2) de l'air.

10. Procédé de transformation de l'écoulement d'un milieu liquide ou gazeux (2) en énergie mécanique et/ou électrique au moyen d'une centrale à écoulement selon l'une quelconque des revendications 1 à 9, comprenant l'étape
de retenue de la pale (30) dans l'écoulement au moyen du premier et du deuxième dispositif de retenue (10, 20), le dispositif de fixation (12) du premier dispositif de retenue (10) étant agencé dans le milieu (2) et fixant la pale (30) en amont de la pale (30),
dans lequel l'agencement du premier et du deuxième dispositif de fixation (10, 20) permet, pour le premier dispositif de retenue (10), une course (H1) de la pale (30) transversalement à l'écoulement du milieu (2) et entre un point mort haut et un point mort bas (T1, T2) d'un déplacement de la pale (30) plus réduite que pour le deuxième dispositif de retenue (20), et
dans lequel l'agencement et la configuration du premier et du deuxième dispositif de retenue (10, 20) permettent un déplacement de la pale (30) dans une zone située au-dessus et au-dessous du dispositif de fixation (12) dans l'écoulement aussi bien en avant qu'en arrière, par conséquent en aval et en amont, que vers le haut et vers le bas, par conséquent transversalement à l'écoulement, ainsi que des superpositions de ces déplacements de la pale (30) dans l'écoulement.
